# EUROPÄISCHE PATENTSCHRIFT

(11) **EP 0 868 578 B1**
(45) Veröffentlichungstag und Bekanntmachung des Hinweises auf die Patenterteilung: **26.09.2001**
(21) Anmeldenummer: 96939930.2
(22) Anmeldetag: 25.11.1996
(51) Int. Cl.: E03C 1/04, C02F 5/00, A47L 25/00

(54) **VORRICHTUNG ZUM ENTKALKEN VON WASSERAUSLÄUFEN**
DEVICE FOR DECALCIFYING WATER OUTLETS
DISPOSITIF DE DETARTRAGE D'EVACUATIONS D'EAU

(30) Priorität: 22.12.1995 DE 19548352
(43) Veröffentlichungstag der Anmeldung: 07.10.1998
(73) Patentinhaber: Bader, Michael, 82541 St. Heinrich (DE)
(72) Erfinder: Bader, Michael, 82541 St. Heinrich (DE)
(74) Vertreter: Leske, Thomas, Dr.
(86) Internationale Anmeldenummer: EP9605225
(87) Internationale Veröffentlichungsnummer: WO9723692

(56) Entgegenhaltungen:
- DE-C- 4 206 333
- DE-U- 9 015 998

## Beschreibung

Die Erfindung betrifft eine Vorrichtung zum Entkalken von Wasserausläufen.

Es ist bekannt, daß insbesondere in Gegenden mit hartem Wasser Wasserausläufe, die üblicherweise mit einem Strahlregler ausgestattet sind, nach einer gewissen Zeit verkalken, so daß die ordentliche Funktion des Wasserauslaufs nicht mehr gewährleistet ist. Als Wasserausläufe sind in erster Linie Wasserhähne zu verstehen. Es fallen darunter aber auch Brauseköpfe.

Bisher hat man die notwendige Entkalkung der Wasserausläufe in der Weise vorgenommen, daß der Strahlregler abgeschraubt und für einige Zeit in einen Behälter mit einer Entkalkungsflüssigkeit, also z.B. Essig, gelegt wurde. Das Abschrauben erfordert aber Werkzeug und ein gewisses Mindestmaß an Geschicklichkeit, was nicht immer vorhanden ist. Außerdem kann es vorkommen, daß sich die Verschraubung des Strahlreglers auch mit einem Werkzeug nicht mehr lösen läßt, weil das Gewinde verkalkt ist.

Aus DE 42 06 333 C1 ist eine Einrichtung zum Entkalken eines Auslaufs eines Wasserhahns bekannt, welche ein aus einem elastischen Material bestehendes Behältnis zur Aufnahme eines Entkalkungsmittels aufweist, welches auf einen Wasserhahn mittels eines an einem Anlageorgan ausgebildeten Befestigungselements aufsetzbar und befestigbar ist. Nachteilig ist bei dieser Einrichtung zum Entkalken jedoch die relativ aufwendige Konstruktion der Befestigungseinrichtung bzw. das umständliche Anbringen bzw. Anpassen der letzteren am Wasserhahn, so daß ein sicherer Halt gewährleistet ist.

DE-GM 90 15 998 U1 offenbart eine Vorrichtung zur Aufnahme einer Entkalkungsflüssigkeit in Form eines sack- oder tütenartigen Behältnisses, welches ebenfalls mittels eines Befestigungselements in Form eines Kunststoffbandes am Wasserhahn anbringbar ist. Auch bei dieser Vorrichtung ist das Anbringen des Behältnisses am Wasserhahn mit Schwierigkeiten verbunden.

In der DE 90 14 906 U1 ist eine Vorrichtung zum Entkalken von Wasseraus- und Zuläufen in Gestalt eines Schwammkörpers beschrieben, der an der zu entkalkenden Stelle positioniert werden kann und dann mit einer Essigtränkung versehen wird. Dieser Schwammkörper kann einen dem Wasserauslauf formangepaßten Stopfenbereich und einen damit verbundenen Randbereich aufweisen; er kann aber auch stabförmig und mit einer plastisch verformbaren Seele versehen sein.
Der Erfindung liegt daher die Aufgabe zugrunde, das Entkalken von Wasserausläufen zu vereinfachen.

Diese Aufgabe wird mit den im Anspruch 1 angegebenen Merkmalen gelöst.

Durch seitliches Einschieben des zu entkalkenden Wasserauslaufes in den eine Entkalkungsflüssigkeit enthaltenden Behälter gelangt der zu entkalkende Bereich in die Flüssigkeit. Der Rand der Anschlußöffnung in der Membran legt sich dabei abdichtend gegen den Wasserauslauf. Der flexible Haltebügel sorgt dabei dafür, daß das Gewicht der Vorrichtung von anderen Teilen der Armatur oder von anderen Installationsteilen aufgenommen wird und daß das Auslaufende beispielsweise eines Wasserhahnes oder eines Duschkopfes während des Entkalkens immer in der Flüssigkeit eingetaucht bleibt.

Vorteilhafte Ausführungsmöglichkeiten der Vorrichtung nach Anspruch 1 sind Gegenstand der Unteransprüche.

Im folgenden wird die Erfindung anhand von in der Zeichnung dargestellten Ausführungsführungsbeispielen näher erläutert. Es zeigt
- Fig. 1: in perspektivischer Ansicht eine Ausführungsform der Erfindung;
- Fig. 2: in der Seitenansicht eine abgewandelte Ausführung der Befestigung der Membran an der Seitenwand des Behälters.

Ein Behälter 1, hier mit quadratischem Grundriß gezeigt, dient zur Aufnahme eines Entkalkungsmittels, also einer sauren Flüssigkeit. Dies kann Essig oder verdünnter Essig sein, wie er in jedem Haushalt vorhanden ist. Der Behälter 1 besteht vorzugsweise aus Kunststoff, z.B. aus Polypropylen oder Polyäthylen.

An einander gegenüberliegenden Seiten des Behälters 1 sind Öffnungen 9 vorgesehen. Diese Öffnungen 9 sind durch eine Membran 2 bzw. 4 abgedeckt. Die Membranen bestehen aus einem gummiartigen Kunststoff, also z.B. aus Silikon oder Neopren, oder aus Gummi. Die Membranen 2 und 4 sind z.B. durch Verkleben an der Seitenwand des Behälters 1 befestigt.

Jede Membran 2, 4 weist eine Anschlußöffnung 6 auf. Die Anschlußöffnungen 6 haben unterschiedliche Durchmesser, wobei zum Aufstecken auf einen Wasserauslauf jeweils die Membran verwendet wird, bei der der Durchmesser der Anschlußöffnung 6 ein dichtendes Anliegen des Randes der Anschlußöffnung 6 am Wasserauslauf gewährleistet.

Der Behälter 1 ist oben durch einen Deckel 7 verschlossen, der zweckmäßigerweise aus demselben Material wie der Behälter 1 besteht. Der Deckel 7 weist ebenfalls eine Anschlußöffnung 6 auf, welche aber unmittelbar im Deckel 7 angeordnet ist, weil in dem Fall, daß durch die Anschlußöffnung 6 im Deckel 7 von oben ein Wasserauslauf in den Behälter 1 eingebracht wird, eine Dichtung hier nicht erforderlich ist.

An der Außenseite des Behälters 1 ist ein Haltebügel 5 aus einem flexiblen Material angeordnet. Zum Befestigen des Haltebügels 5 am Behälter 1 sind an dessen Außenseite vorstehende Befestigungsmittel 3 angebracht, welche mit Gegenbefestigungsmitteln am Haltebügel 5 zusammenwirken. Befestigungsmittel 3 und Gegenbefestigungsmittel können z.B. nach Art eines Druckknopfes ausgebildet sein. Möglich ist aber auch die Ausbildung der Befestigungsmittel 3 in der Form eines Knopfes, der mit Knopflöchern im Haltebügel 5 zusammenwirkt.

Die Befestigungsmittel 3 sind im Dreieck angeordnet, so daß die Neigung des Haltebügels 5 und seine Länge variiert werden können.

Die Anschlußöffnungen 6 sind jeweils durch einen Stopfen 8 verschließbar.

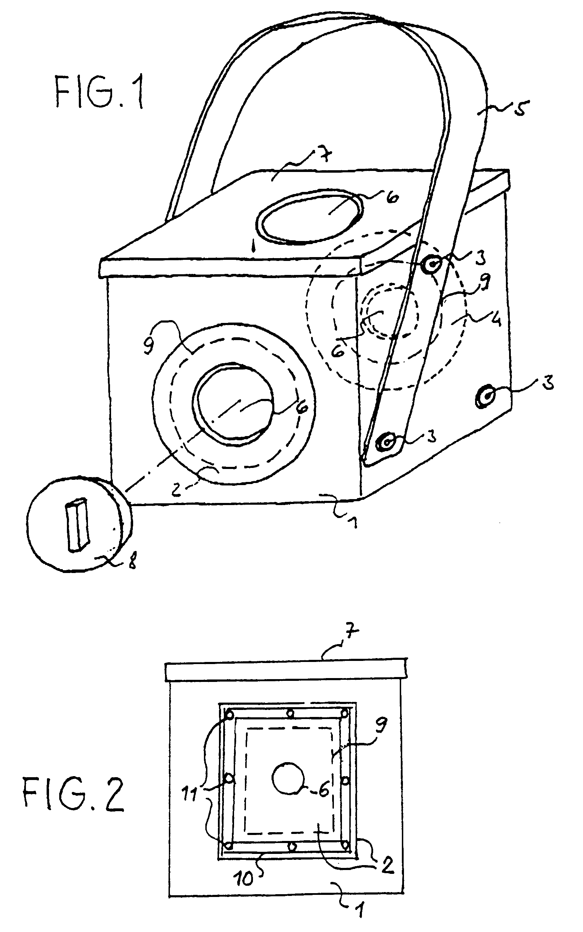

In Fig. 2 ist eine von Fig. 1 abweichende Befestigung der Membran 2 an der Seitenwand des Behälters 1 dargestellt. Das Befestigen der Membran 2 erfolgt hier durch einen außen auf der Membran 2 aufliegenden Rahmen 10, der durch Schrauben 11 mit einem innen an der Seitenwand des Behälters 1 anliegenden zweiten Rahmen (nicht dargestellt) verbunden ist, so daß der Rand der Membran 2 eingeklemmt ist.

Die Funktion der Vorrichtung ist folgende:

Soll ein Wasserauslauf entkalkt werden, dann sucht man sich die Anschlußöffnung 6, die aufgrund ihres Durchmessers am ehesten eine Abdichtung des in den Behälter eingeschobenen Wasserauslaufs gewährleistet. Der Wasserauslauf wird also durch die passende Anschlußöffnung 6 in den Behälter 1 eingeschoben, der vor oder nach dem Einschieben mit Entkalkungsflüssigkeit gefüllt wird. Die Entkalkungsflüssigkeit muß den gesamten eingeschobenen Wasserauslauf bedecken.

Die nicht benötigte zweite Anschlußöffnung 6 wird durch einen Stopfen 8 verschlossen.

Die Anschlußöffnung 6 im Deckel 7 kann offen bleiben, denn sie liegt oberhalb der Oberfläche der Entkalkungsflüssigkeit. Die Anschlußöffnung 6 im Deckel 7 wird zweckmäßigerweise zum Einbringen der Entkalkungsflüssigkeit verwendet.

Der in seiner Länge und in seiner Richtung verstellbare Haltebügel 5 dient dazu, den Behälter 1 an einem Festpunkt aufzuhängen.

Wenn der zu entkalkende Wasserauslauf sich einige Stunden, vorzugsweise über Nacht, in der Entkalkungsflüssigkeit befindet, dann ist der Wasserauslauf entkalkt. Der Behälter 1 kann dann von dem Wasserauslauf abgezogen werden.

Bei einem nach unten abgebogenen Wasserauslauf oder bei einem Brausekopf kann die im Deckel 7 des Behälters 1 angeordnete Anschlußöffnung 6, die nicht durch eine Membran abgedeckt ist, verwendet werden. In diesem Falle müssen beide in der Seitenwand des Behälters 1 angeordnete Anschlußöffnungen 6 durch Stopfen 8 verschlossen werden.

## Patentansprüche

1. Vorrichtung zum Entkalken von Wasserausläufen, **gekennzeichnet durch** folgende Merkmale:
in der Seitenwand eines zur Aufnahme einer Entkalkungsflüssigkeit bestimmten Behälters (1) befindet sich mindestens eine Öffnung (9);
die Öffnung (9) ist durch eine Membran (2, 4) aus gummiartigem Material abgedeckt, wobei die Membran (2, 4) eine gegenüber der Öffnung (9) kleinere Anschlußöffnung (6) für das Einschieben des zu entkalkenden Wasserauslaufs aufweist;
an der Seitenwand des Behälters (1) ist außen ein flexibler Haltebügel (5) befestigt.

2. Vorrichtung nach Anspruch 1, **dadurch gekennzeichnet, daß** bei Anordnung von mehr als einer Anschlußöffnung (6) diese Anschlußöffnungen (6) unterschiedliche Durchmesser aufweisen.

3. Vorrichtung nach Anspruch 1 oder 2, **dadurch gekennzeichnet, daß** die jeweils nicht benötigte Anschlußöffnung (6) durch einen Stopfen (8) verschließbar ist.

4. Vorrichtung nach einem der Ansprüche 1 bis 3, **dadurch gekennzeichnet, daß** der Behälter (1) oben durch einen Deckel (7) abgeschlossen ist.

5. Vorrichtung nach Anspruch 4, **dadurch gekennzeichnet, daß** im Deckel (7) eine weitere Anschlußöffnung (6) vorgesehen ist.

6. Vorrichtung nach einem der Ansprüche 1 bis 5, **dadurch gekennzeichnet, daß** an der Außenseite des Behälters (1) Befestigungsmittel (3) angeordnet sind, welche mit an dem flexiblen Haltebügel (5) über seine Länge verteilten Gegenbefestigungsmitteln so zusammenwirken, daß die Länge und/oder die Richtung des Haltebügels (5) verstellbar ist.

7. Vorrichtung nach einem der Ansprüche 1 bis 6, **dadurch gekennzeichnet, daß** die Membran(en) (2, 4) aus Neopren, Silikon oder Gummi besteht bzw. bestehen.

8. Vorrichtung nach einem der Ansprüche 1 bis 7, **dadurch gekennzeichnet, daß** die Membran (2, 4) bzw. die Membranen durch innen und außen an der Seitenwand des Behälters (1) angeordnete, miteinander verbundene Rahmen (10) an der Seitenwand befestigt ist bzw. sind.

## Claims

1. Device for the decalcification of water outlets, **characterized by** the following features:
at least one orifice (9) is located in the side wall of a container (1) intended for receiving a decalcification liquid;
the orifice (9) is covered by a diaphragm (2, 4) made of elastomeric material, the diaphragm (2, 4) having a connecting orifice (6) smaller than the orifice (9) and intended for pushing in the water outlet to be decalcified;
a flexible holding handle (5) is fastened to the side wall of the container (1) on the outside.

2. Device according to Claim 1, **characterized in that**, when more than one connecting orifice (6) are arranged, these connecting orifices (6) have different diameters.

3. Device according to Claim 1 or 2, **characterized in that** the connecting orifice (6) not required in each case can be closed by means of a plug (8).

4. Device according to one of Claims 1 to 3, **characterized in that** the container (1) is closed off on top by means of a lid (7).

5. Device according to Claim 4, **characterized in that** a further connecting orifice (6) is provided in the lid (7).

6. Device according to one of Claims 1 to 5, **characterized in that** fastening means (3) are arranged on the outside of the container (1), which cooperate with counterfastening means distributed on the flexible holding handle (5) over the length of the latter, in such a way that the length and/or direction of the holding handle (5) is adjustable.

7. Device according to one of Claims 1 to 6, **characterized in that** the diaphragm(s) (2, 4) consists (consist) of neoprene, silicone or rubber.

8. Device according to Claims 1 to 7, **characterized in that** the diaphragm (2, 4) or the diaphragms is or are fastened to the side wall by means of interconnected frames (10) arranged on the side wall of the container (1) on the inside and outside.

## Revendications

1. Dispositif de détartrage d'évacuations d'eau, **caractérisé par** les caractéristiques suivantes:
au moins une ouverture (9) est présente dans la paroi latérale d'un récipient (1) destiné à recevoir un liquide de détartrage,
l'ouverture (9) est recouverte par une membrane (2, 4) formée d'un matériau type caoutchouc, la membrane (2, 4) possédant une ouverture de raccordement (6), qui est plus petite que l'ouverture (9) et est prévue pour l'insertion de l'évacuation d'eau devant être détartrée;
un étrier flexible de retenue (5) est fixé sur la paroi latérale du récipient (1).

2. Dispositif selon la revendication 1, **caractérisé en ce que** dans le cas où plus d'une ouverture de raccordement (6) est prévue, ces ouvertures de raccordement (6) possèdent des diamètres différents.

3. Dispositif selon la revendication 1 ou 2, **caractérisé en ce que** l'ouverture de raccordement (6) respectivement non nécessaire peut être fermée par un bouchon (8).

4. Dispositif selon les revendications 1 à 3, **caractérisé en ce que** le récipient (1) est fermé à sa partie supérieure par un couvercle (7).

5. Dispositif selon la revendication 4, **caractérisé en ce qu'**une autre ouverture de raccordement (6) est prévue dans le couvercle (7).

6. Dispositif selon l'une des revendications 1 à 5, **caractérisé en ce qu'**au côté extérieur du récipient (1) sont raccordés des moyens de fixation (3) qui coopèrent avec des moyens de fixation antagonistes répartis sur l'étrier flexible de retenue (5), et ce sur toute sa longueur, de telle sorte que la longueur et/ou la direction de l'étrier de retenue (5) sont réglables.

7. Dispositif selon l'une des revendications 1 à 6, **caractérisé en ce que** la ou les membranes (2, 4) sont réalisées en néoprène, en silicone ou en caoutchouc.

8. Dispositif selon l'une des revendications 1 à 7, **caractérisé en ce que** la membrane (2, 4) ou les membranes sont fixées à la paroi latérale au moyen de cadres (10) disposés intérieurement et extérieurement sur la paroi latérale du récipient (1) et reliés entre eux.
